# FASCICULE DE BREVET EUROPEEN

(11) **EP 0 430 836 B1**
(45) Date de publication et mention de la délivrance du brevet: **26.04.1995**
(21) Numéro de dépôt: 90440111.4
(22) Date de dépôt: 23.11.1990
(51) Int. Cl.: H02J 13/00

(54) **Dispositif de télécommande à courant porteur**
Fernsteuerungsvorrichtung mit Trägerfrequenz
Remote control carrier communication system

(30) Priorité: 27.11.1989 FR 8915762
(43) Date de publication de la demande: 05.06.1991
(73) Titulaire: Ets. AUGIER S.A., F-06516 Carros Cédex (FR)
(72) Inventeur: Grinneiser, Raymond, F-06560 Valbonne (FR)
(74) Mandataire: Bonneau, Gérard

(56) Documents cités:
- EP-A- 0 023 105
- EP-A- 0 320 390
- WO-A-82/03299
- WO-A-89/10030
- DE-A- 2 803 847
- GB-A- 2 032 664
- GB-A- 2 111 806
- GB-A- 2 187 344

## Description

La présente invention concerne un dispositif de télécommande à courant porteur applicable à tout circuit électrique, notamment aux circuits électriques comportant de nombreuses charges, et plus particulièrement à la télécommande de balises de terrains d'aviation.

Parmi les dispositifs de télécommande actuellement connus (voir par exemple EP-A- 320 390 et GB-A-2 032 664), ceux à modulation de fréquence présentent l'inconvénient d'être sensibles aux parasites électro-magnétiques et inadaptés aux applications à grandes distances.

Les dispositifs de télécommande à modulation d'amplitude, de type à transformateur d'injection et commutateur d'injection réalisent la somme des amplitudes instantanées d'un signal porteur et d'un signal modulant, et sont utilisés par exemple pour la distribution de l'électricité en France. Toutefois ils présentent l'inconvénient de nécessiter une source d'alimentation de puissance pour la télécommande et des organes de protection complexes et de ne permettre en outre aucune interactivité entre l'émetteur et le récepteur de la télécommande.

La présente invention a pour but de remédier à ces divers inconvénients des systèmes connus en proposant un dispositif de télécommande qui, tout en ne nécessitant aucune source de puissance externe, permet au récepteur de devenir émetteur, supprime les transformateurs d'injection, ne modifie pas les paramètres du courant reçu par les charges télécommandées et ne consomme que l'énergie de commutation de la télécommande.

Il convient de noter ici que, le dispositif selon l'invention étant interactif, l'émetteur et le récepteur peuvent alterner leurs rôles en cours de fonctionnement. A des fins de simplification, ils sont désignés dans tout ce qui suit par la fonction première qui leur est assignée et qui correspond au temps zéro de la mise en fonctionnement du dispositif.

Afin d'atteindre les différents buts qu'elle se propose, l'invention utilise pour la fonction émission du récepteur une commutation d'impédance directement couplée au réseau, faisant varier le paramètre variable dudit réseau, tension ou intensité de courant électrique, en étant installée respectivement en série ou en parallèle de la charge télécommandée, de telle manière que la partie réception de l'émetteur de la télécommande peut recevoir cette variation de paramètre variable sans que la charge ne la perçoive.

Pour l'émetteur, au contraire, c'est le paramètre fixe du réseau qui est modifié par une commutation d'impédance directement couplée au réseau, respectivement en parallèle ou en série, de telle manière que la charge perçoive cette variation de paramètre fixe.

Ces variations de paramètres, fixes ou variables, se font à une fréquence supérieure à celle du courant électrique du réseau.

Le dispositif selon l'invention agit donc en transmission de l'émetteur vers le récepteur, par modulation d'amplitude du paramètre fixe du circuit électrique et en transmission du récepteur vers l'émetteur par modulation d'amplitude du paramètre variable du circuit électrique.

Il s'ensuit que seule la puissance de commutation des impédances est consommée par le dispositif objet de la présente invention.

Par ailleurs, le dispositif est interactif, c'est-à-dire que le récepteur peut répondre à des interrogations ou des ordres provenant de l'émetteur.

Enfin, la fabrication de ce dispositif est simple et il n'exige aucun organe de protection particulier.

Il convient de faire remarquer que la charge télécommandée reçoit une énergie électrique invariable entre les phases actives et inactives du récepteur, en sorte que son utilisation n'est pas perturbée par l'utilisation du récepteur du dispositif selon l'invention.

Les avantages, buts et caractéristiques de la présente invention seront mieux compris à la lecture de la description qui suit, faite en regard du dessin annexé qui en illustre différents modes de réalisation, étant bien entendu que cette description ne présente aucun caractère limitatif vis-à-vis de l'invention.

Dans le dessin annexé :
- la figure 1a représente un schéma électrique d'un réseau à intensité de courant constante comportant la partie émission d'un récepteur d'un dispositif de télécommande selon l'invention.
- la figure 1b représente un schéma électrique d'un réseau à intensité de courant constante comportant la partie émission d'un émetteur d'un dispositif de télécommande selon l'invention.
- la figure 2 représente un schéma électrique d'un dispositif selon l'invention monté sur un réseau à intensité de courant constante.
- les figures 3a et 3b représentent des diagrammes de signaux électriques émis ou reçus par un dispositif de télécommande selon l'invention adapté à un réseau à intensité de courant constante tel que représenté en figure 2.
- la figure 4 représente un spectre de signaux électriques portés par un courant et émis par la partie émission de l'émetteur ou du récepteur du même dispositif.

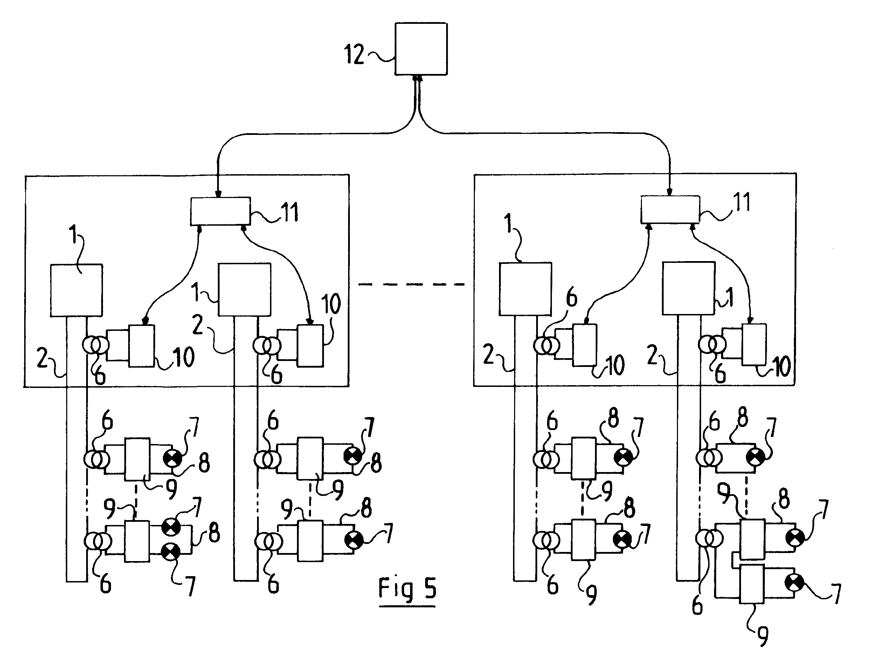

- la figure 5 représente un dispositif selon l'invention appliqué à la télécommande d'un ensemble de boucles de balisage de terrain d'aviation.
- les figures 6a et 6b représentent des diagrammes temporels de signaux électriques émis par l'émetteur ou le récepteur d'un dispositif selon l'invention.
- la figure 7 représente un schéma de fonctionnement de la partie puissance de l'émetteur d'un dispositif selon l'invention.
- la figure 8 représente un mode de réalisation de cette partie puissance d'un émetteur.
- la figure 9 représente un schéma de fonctionnement de la partie commande d'un émetteur selon l'invention.
- la figure 10 représente un diagramme de fonctionnement de l'émetteur d'un dispositif selon l'invention.
- la figure 11 représente un schéma de fonctionnement de la partie puissance du récepteur d'un dispositif selon l'invention.
- la figure 12 représente un mode de réalisation de cette partie puissance d'un récepteur.
- la figure 13 représente un schéma de fonctionnement d'une partie commande d'un récepteur.
- la figure 14 représente un diagramme des signaux reçus et générés par le récepteur d'un dispositif selon l'invention.

Dans la figure 1a sont représentés un générateur d'énergie électrique 1, un câble électrique 2, une charge électrique 3 et la partie émission d'un récepteur 9 selon l'invention constitué d'une impédance 4 et d'un commutateur 5. Le câble électrique 2 relie le générateur électrique 1 à la charge 3, à l'impédance 4, et, parallèlement à cette impédance 4, au commutateur 5. Tous ces éléments sont de type connu. Le générateur 1 est ici un générateur maintenant fixe l'intensité efficace du courant à ses bornes.

L'intensité efficace du courant électrique étant ici le paramètre fixe, la partie émission du récepteur 9 est placé en série avec la charge 3 et l'impédance 4 qu'il comporte est placée en parallèle avec le commutateur 5. Lorsque le commutateur 5 est ouvert, la tension efficace aux bornes de l'impédance 4 est égale au produit de l'intensité efficace du courant émis par le générateur 1 par l'impédance 4 et lorsque le commutateur 5 est fermé, cette tension est nulle.

La tension, paramètre électrique variable, est égale, aux bornes du générateur 1, à la somme des tensions aux bornes de la charge 3 et aux bornes de l'impédance 4.

Le commutateur 5 fait donc varier le paramètre variable, ici la tension, aux bornes du générateur 1 sans le faire varier aux bornes de la charge 3.

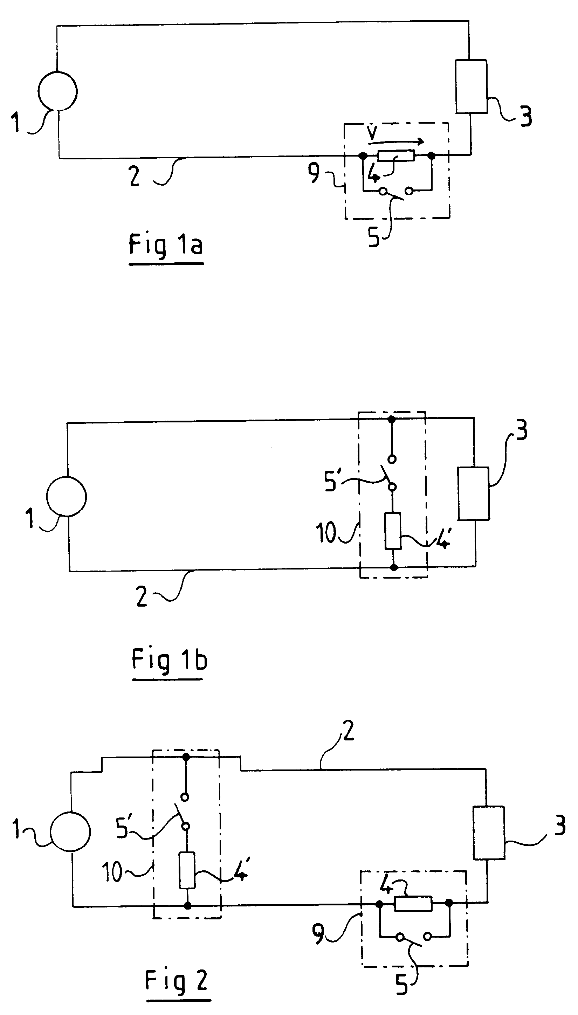

Dans la figure 1b, sont représentés un générateur d'énergie électrique 1, un câble électrique 2, une charge 3, et un émetteur 10 de télécommande selon l'invention comportant une impédance 4′ placée en série avec un commutateur 5′, l'émetteur 10 étant placé en parallèle avec la charge 3. Tous ces éléments sont de même type que dans la figure 1. Le câble électrique 2 relie le générateur 1 à la charge 3 et, parallèlement, à l'impédance 4′ montée en série avec le commutateur 5′.

Le générateur 1 fixe l'intensité du courant à ses bornes. On comprend aisément que la commutation du commutateur 5′ fait varier la tension aux bornes du générateur 1 et aux bornes de la charge 3, et fait varier l'intensité du courant aux bornes de la charge 3. Un tel montage fait donc varier le paramètre fixe, ici l'intensité du courant électrique, aux bornes de la charge 3.

Si on se réfère maintenant à la figure 2, on voit que le dispositif selon l'invention est constitué d'un émetteur 10 monté en parallèle avec le générateur 1 et d'un récepteur 9 monté en série avec la charge 3, l'émetteur 10 et le récepteur 9 étant identiques à ceux décrits en regard des figures 1a et 1b.

Le générateur 1 fixant l'intensité du courant électrique à ces bornes, le commutateur 5′ fait varier aux bornes du récepteur 9 l'intensité du courant électrique, et le commutateur 5 fait varier aux bornes de l'émetteur 10 la tension du courant.

Le dispositif objet de la présente invention permet ainsi un dialogue entre l'émetteur 10 et le récepteur 9 par variation aux bornes du premier du paramètre variable, ici la tension, et aux bornes du second du paramètre fixe, ici l'intensité du courant électrique. Pour un réseau dont le générateur serait à tension constante, l'émetteur 10 comporterait un commutateur 5′ placé en parallèle avec une impédance 4′, cet émetteur 10 se trouvant alors en série avec le générateur 1. De même, le récepteur 9 comporterait un commutateur 5 placé en série avec une impédance 4, ce récepteur 9 étant placé en parallèle avec la charge 3.

Le même principe de fonctionnement s'applique aussi bien aux générateurs de courant continu qu'aux générateurs de courant alternatif. Pour le courant alternatif les paramètres fixes ou variables sont l'intensité efficace et la tension efficace.

Dans un but de clarté, les figures suivantes représentent des signaux et circuits correspondant au cas où le générateur de courant est un générateur d'intensité, le cas d'un générateur de tension s'en déduisant selon les explications ci-dessus. En outre, la description est faite pour un courant alternatif, la commutation des commutateurs 5 et 5′ se faisant à fréquence plus élevée que celle du courant.

Dans la figure 3a sont représentés sur un diagramme de temps quatre signaux concernant un récepteur de télécommande selon l'invention.

Le signal I représente l'intensité du courant alternatif parcourant un circuit série. Le signal U représente la différence de potentiel aux bornes du générateur 1 avant et pendant une phase de commutation à haute fréquence d'un interrupteur 5. Le signal V représente la différence de potentiels aux bornes de l'impédance 4. Le signal logique L représente les positions ouverte (O) ou fermées (1) de l'interrupteur 5.

La compréhension de cette figure ne pose aucun problème et n'est pas développée ici.

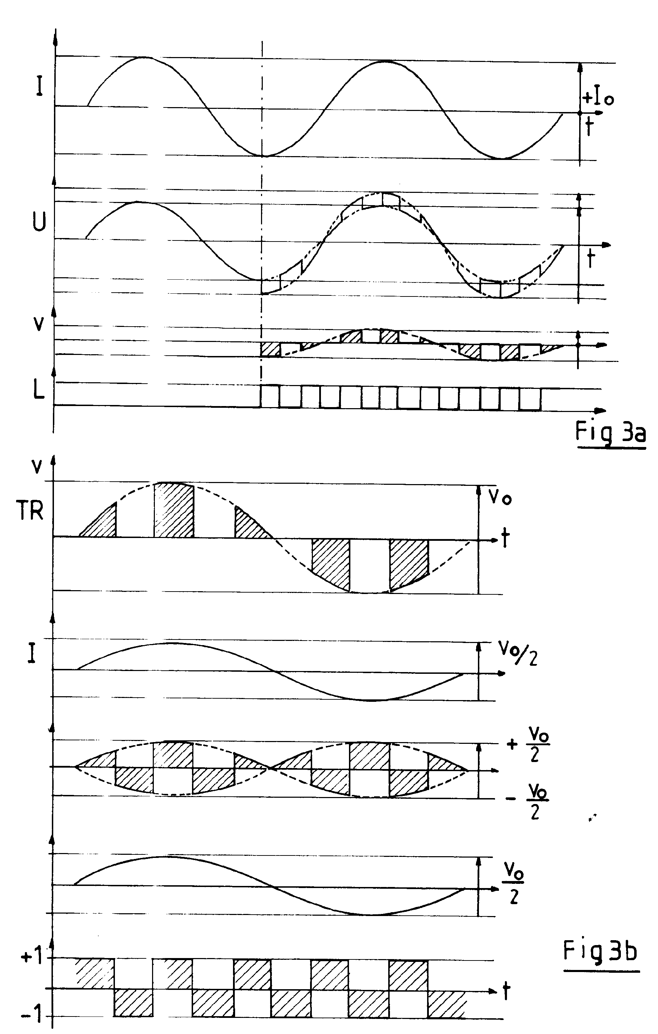

Dans la figure 3b sont représentés les phases d'analyse du signal émis par le récepteur du dispositif et perçu par l'émetteur 10. Il s'agit ici de retrouver les moments d'ouverture et de fermeture de l'interrupteur 5.

La différence de potentiels aux bornes de l'émetteur 10, représentée dans la figure précédente (signal U) peut se décomposer en la somme d'un signal proportionnel au signal I et d'un signal de télécommande émis par le récepteur TR, ce signal de télécommande est le produit d'un signal proportionnel au signal I et d'une fonction de hachage à signaux carrés de même fréquence que celle de commutation de l'interrupteur 5.

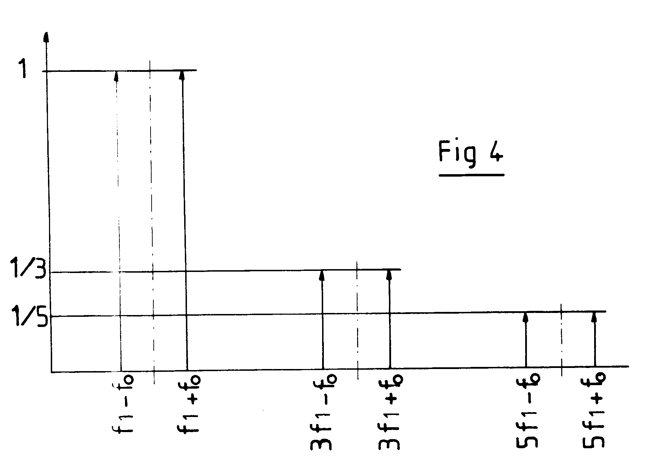

L'analyse par un spectroscope ou par un circuit d'analyse de spectre de la tension aux bornes de l'émetteur 10 donne donc une décomposition en une infinité de raies telles que représentées en figure 4 puisqu'il y a des signaux carrés.

Dans la figure 4 on voit le spectre du signal représentant la différence de potentiels aux bornes de l'émetteur 10. Ce spectre comporte deux raies principales et une infinité de raies secondaires s'atténuant en 1/n, avec n impair. Les deux raies principales correspondent aux fréquences f1-fo et f1+fo, fo étant la fréquence du courant alternatif délivré par le générateur 1 et f1 étant la fréquence de commutation du commutateur 5.

L'extraction du signal utile peut donc être réalisée par filtrage des fréquences en ne retenant au choix que la fréquence f1+fo ou f1-fo. L'amplitude crête de la tension obtenue est égale à la différence de potentiel aux bornes de l'impédance 4 divisée par pi.

Pour l'émetteur du dispositif, les schémas représentés en figure 1 et 2 peuvent s'appliquer mais les paramètres fixes et variables sont échangés. Ainsi, l'émetteur agit sur le paramètre fixe du courant électrique du circuit. Il comporte les mêmes éléments que le récepteur, impédance et interrupteur, mais est placé en série sur un circuit à intensité de courant constante et en parallèle pour un circuit à différence de potentiels constante.

Les mêmes fonctionnements que ceux décrits précédemment pour le récepteur s'appliquent et on comprend que le récepteur peut percevoir les commutations de l'émetteur par filtrage de fréquences données.

Il est à noter que pour l'émission les deux paramètres du courant (tension et intensité) varient et influencent la charge 3. De plus, le signal de télécommande varie en fonction de l'impédance commutée et de la charge totale du réseau.

Pour une meilleure compréhension de l'invention la figure suivante représente une application de cette invention aux circuits électriques de balisage de terrains d'aviation. Dans cette application, la télécommande permet d'allumer et d'éteindre des séries de balises tandis que l'interactivité permet d'en connaître les pannes et les allumages.

Chaque boucle de balisage comporte un générateur 1, un câble 2, des transformateurs 6, des balises lumineuses 7 et des fils 8 reliant les circuits secondaires des transformateurs 6 et les bornes des balises lumineuses 7. A chaque balise est associé un récepteur 9 et à chaque boucle un émetteur 10, des interfaces 11 étant reliées aux émetteurs 10 et à un ordinateur 12 adapté à commander l'ensemble des émetteurs 10.

L'ordinateur 12 communique avec chacun des récepteurs 9 au moyen de deux adresses informatiques, une adresse de commande, qui peut être commune à plusieurs récepteurs 9, et une adresse d'état, qui est unique pour chaque récepteur. Cet ordinateur 12 utilise un codage des ordres et des réponses qu'il reçoit des récepteurs 9 grâce aux interfaces 11.

Quand un récepteur est interrogé, c'est par appel de son adresse d'état. Lorsqu'il est commandé, c'est par appel de son adresse de commande. Pour préciser plus encore, chaque interface possède son adresse et par l'utilisation d'un simple port parallèle de huit connections il est possible de commander ou d'interroger des centaines de récepteurs 9.

Les figures suivantes concernent une seule boucle de balisage.

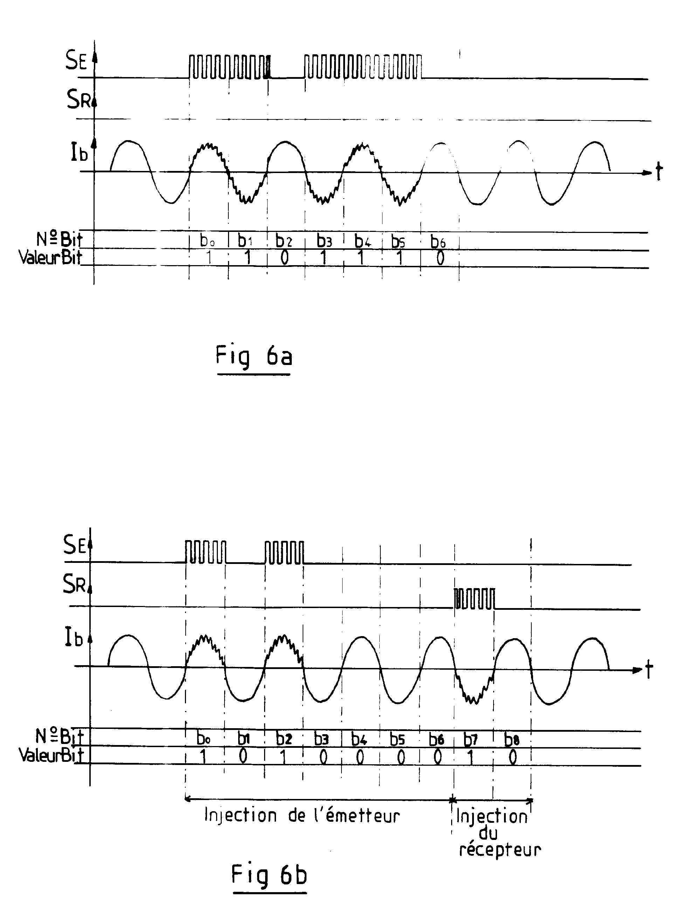

Dans la figure 6 sont représentés des signaux de commande (figure 6a) et des signaux de demande d'état (figure 6b). Dans un but explicatif le codage sur les huit bits suivants a été utilisé pour réaliser une application de l'invention.
- bit 0: bit de démarrage, 1 marque le début du code
- bit 1: 0 indique une demande d'état et 1 une commande
- bit 2 à 5: adresses du ou des récepteurs 9 appelés, en code DCB positif
- bit 6: réservé aux ordres: 1 allumage, 0 extinction
- bit 7: réservé aux demandes d'état: 1 lampe en état, 0 lampe en panne
- bit 8: réservé aux demandes d'état: 1 lampe allumée, 0 lampe éteinte

Il est à noter que ce codage n'est pas optimisé mais qu'il est d'une utilisation pratique dans la description présente.

Dans la figure 6a sont représentés les signaux correspondants à une commande d'extinction d'un récepteur 9 d'adresse de commande portant le numéro 7 et dans la figure 6b sont représentés les signaux correspondant à une demande d'état d'un récepteur 9 portant le numéro 8 et répondant que la balise est en état et éteinte. Pour chacune de ses deux figures sont représentés sur un diagramme de temps les commutations logiques de l'émetteur 10SE et du récepteur 9, appelé SR, ainsi que la forme du signal d'intensité de courant I et la signification binaire de ces signaux.

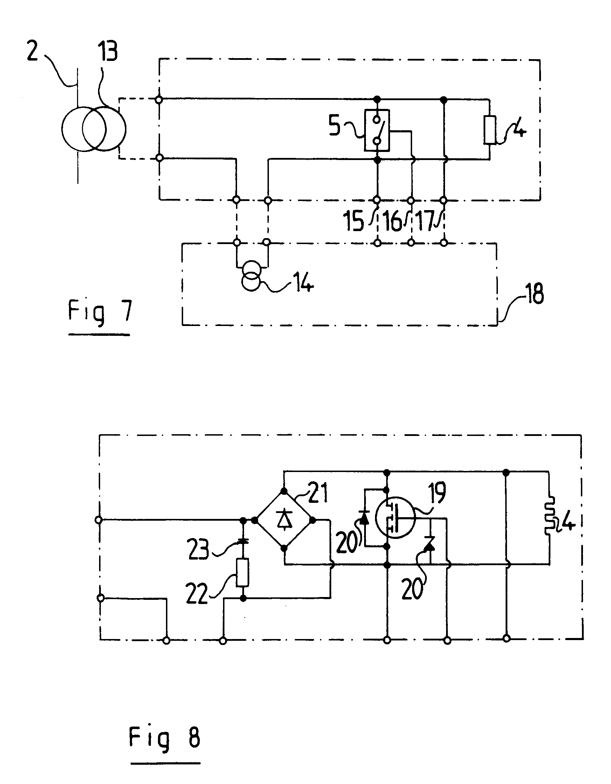

Dans la figure 7 est représenté un schéma de fonctionnement de la partie puissance d'un émetteur 10 selon l'invention. On y voit une impédance 4, un commutateur 5 placé en parallèle avec l'impédance 4, un transformateur d'intensité 13 relié aux câbles 2 du réseau, un transformateur d'intensité secondaire 14 placé en série avec le commutateur 5 et l'impédance 4, et trois fils 15, 16 et 17 reliés à un circuit électronique 18 de commande décrit plus loin et respectivement à une borne du commutateur 5, à l'interrupteur 5 et à l'autre borne du commutateur 5. Le transformateur d'intensité secondaire 14 alimente le circuit électronique 18.

Dans la figure 8 est représentée une réalisation pratique de cette partie puissance d'un émetteur 10. On y trouve un interrupteur 5 réalisé par l'utilisation d'un transistor MOS 19 associé à des diodes de protection 20, une impédance 4 réalisée par une résistance. Un redresseur 21 associé à une résistance 22 et à un condensateur 23 permet d'utiliser le transistor qui est un composant électronique polarisé.

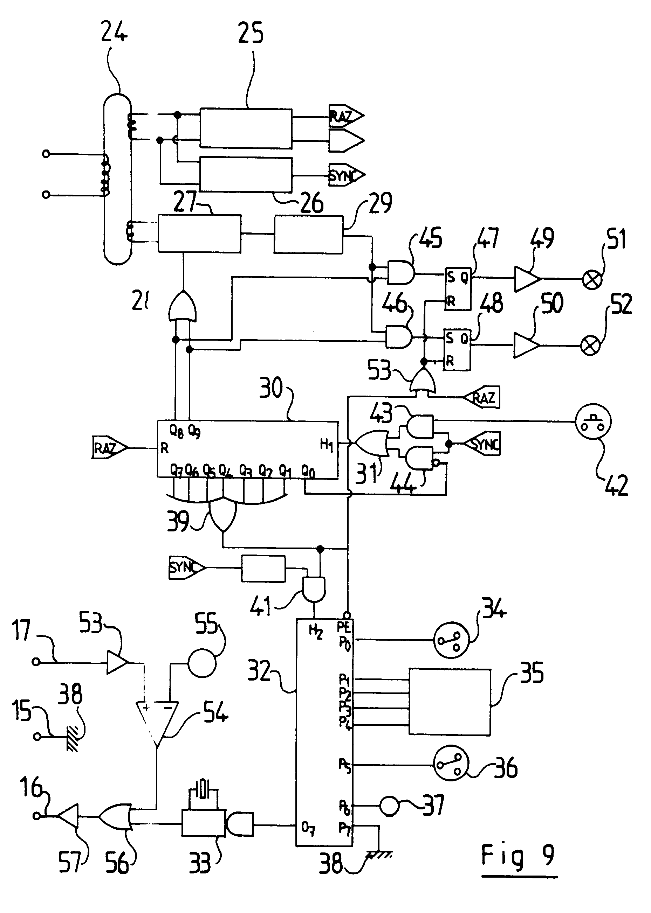

Dans la figure 9 est représenté un mode de réalisation de la partie commande d'un émetteur selon l'invention. On y trouve un transformateur d'intensité 24. Ce transformateur est relié sur son enroulement secondaire à un module d'alimentation 25 commandant aussi une remise à zéro du système à chaque mise sous tension de cette alimentation 25. Ce transformateur est aussi relié à un module de synchronisation 26 délivrant des impulsions de synchronisation à chaque passage à zéro du courant alternatif. Enfin, ce transformateur 24 est aussi relié à un module de détection de fréquence 27 permettant de recevoir les réponses des récepteurs 9. Ce module 27 est validé par une porte logique 28 et fournit un signal à un module de mise en forme 29 décodant les informations (deux bits) provenant d'un récepteur 9. Un compteur-décodeur 30 séquence les opérations, est soumis à une remise à zéro par le module d'alimentation 25 et reçoit les impulsions provenant d'une porte logique 31 pour les coder, par comptage en dix bits correspondant aux pattes de circuit intégré Q0 à Q9. Le registre à décallage 32 met les informations successives provenant du compteur-décodeur 29, en série et commande un oscillateur 33 relié au fil 16. Le registre à décalage 32 reçoit sur ses pattes P0 à P7 des signaux logiques provenant respectivement d'un commutateur 34 (P0), d'une roue codeuse 35 (P1 à P4), d'un commutateur 36 (P5), d'une tension de référence 37 (P6) et de la masse 38 (P7). Les commutateurs 34 et 36 sont reliés d'une part à la tension de référence 37 et d'autre part à la masse 38 de telle manière que leur commutation fasse passer l'état des pattes P0 et P5 d'un niveau logique de 1 à un niveau logique de 0. Le registre à décallage 32 émet sur sa patte Q7 successivement les niveaux logiques affichés sur ses pattes P7 à P0, cette émission étant validée par un niveau logique de 1 sur sa patte PE connectée par une porte "ou" 39 aux pattes Q1 à Q7 du compteur 39 et cette émission est synchronisée par l'intermédiaire d'une porte logique "et" 41 reliée à la sortie de la porte logique 39 et au module de synchronisation 26.

Pour commander le fonctionnement de l'émetteur un bouton poussoir 42 est relié à une entrée d'une porte logique "et" 43, relié sur son autre entrée au module de synchronisation 26. Une deuxième porte logique "et" 44 est aussi reliée au module de synchronisation 26 et à la patte Qo du compteur 30, pour ses deux entrées. Les sorties des portes logiques 43 et 44 sont reliées aux entrées d'une porte logique "ou" 31, qui est reliée à l'entrée H1 du compteur 30.

Pour décoder les informations provenant du module de mise en forme 29, informations correspondant à la réponse d'un récepteur 9, deux portes logiques "et" 45 et 46 sont reliées sur une de leurs entrées à la sortie de ce module 29 et sur leur autre entrée respectivement aux pattes Q8 et Q9 du compteur 30. Les sorties de ces portes logiques 45 et 46 sont reliées à des bascules 47 et 48, elles-mêmes reliées à des amplificateurs 49 et 50 reliés à leur tour à des ampoules lumineuses 51 et 52, respectivement. Pour valider le fonctionnement des bascules 47 et 48, celles-ci sont reliées par leur patte de validation R à une porte logique "ou" 53 reliée en entrée à la porte logique 39 et au signal de remise à zéro provenant du module d'alimentation 25. Un circuit de protection contre les surtensions est relié au fil 17 de la partie puissance. Ce circuit de protection est constitué d'un amplificateur 53 relié au fil 17 et à un comparateur 54 relié aussi en entrée à une tension de référence 55 et en sortie à une porte logique "ou" 56. Cette porte 56 est reliée à la sortie de l'oscillateur 33, à un amplificateur 57 lié lui-même au fil 16 de la partie puissance. Enfin, le fil 15 de la partie puissance est relié à la masse 38.

L'ensemble de cette partie commande de l'émetteur représente un circuit complexe qui peut être commandé par un ordinateur 12 en remplaçant les éléments manipulés manuellement, bouton poussoir 42, commutateurs 34 et 36, roue codeuse 35, et les ampoules 51 et 52 par des connexions avec un port parallèle d'ordinateur.

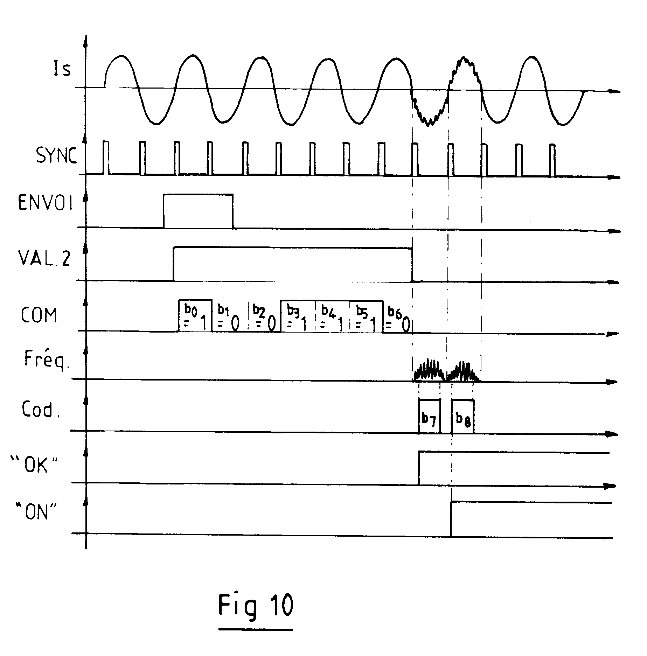

La compréhension de la figure 9 ne pose pas de difficulté mais, pour comprendre le fonctionnement dynamique, la figure 10 représente un diagramme dans le temps de plusieurs signaux transmis dans ce circuit de commande.

Pour expliquer le fonctionnement dynamique de ce circuit, on va supposer que l'on veuille demander l'état du récepteur 9 dont l'adresse d'état est 7, soit "0111" en code DCB, et que celui-là va répondre que la lampe est en état et allumée, soit "11". A la mise sous tension, le module d'alimentation 25 génère un signal de remise à zéro qui met le compteur 30 à zéro, soit la patte Qo à l'état logique 1 et les pattes Q1 à Q9 à l'état logique "o". De même les bascules 47 et 48 sont mises à l'état logique "o" par cette remise à zéro. La patte Qo étant à l'état logique "1", la porte logique 44 est à l'état "o" ainsi que la porte logique 43. Le compteur 30 ne reçoit pas de signaux à compter et la porte logique 39 rest à l'état logique "o". L'utilisateur peut donc afficher sur les commutateurs 34 et 36 et sur la roue codeuse 35 les ordres, soit dans l'exemple donné le commutateur 34 reliant la patte P5 du registre à décallage 32 à la masse 38, la roue codeuse 35 affichant le chiffre 7 et le codant en états logiques "o", "1", "1" et "1" respectivement sur les pattes P4 à P1 du registre 32, et le commutateur 34 étant indifféremment sur l'une de ses deux positions

La figure 10 représente dans l'ordre le signal de tension reçu sur le transformateur 24, le signal de synchronisation émis par le module de synchronisation 26, le signal émis par le bouton poussoir 42, le signal de sortie de la porte logique 39, le signal de sortie du registre à décallage 32, le signal reçu par le détecteur de fréquence 27, le signal émis par le module de mise en forme 29 et l'état des ampoules 51 et 52.

En appuyant sur le bouton poussoir 42 pendant une durée supérieure à la période du courant porteur, la porte 17 passe pendant un temps à l'état logique "1", le compteur 30 prend alors sur sa patte Q1 à la valeur "1" et la porte logique 39 prend l'état logique "1". La porte logique 44 transmet alors les impulsions de synchronisation et le compteur 30 peut les compter et maintenir la porte logique 39 dans l'état logique "1" pendant sept périodes du courant porteur. Le registre à décallage 32 est validé par sa patte PE et émet successivement les valeurs de ces pattes P7 à Po sur sa patte Q7. Pendant les deux périodes du courant suivantes, les pattes Q8 et Q9 sont l'une ou l'autre au niveau logique "1" et les bascules 47 et 48 sont successivement validées ainsi que le module de détection de fréquence 27. Celui-ci transmet les fréquences modulantes au module de mises en forme 29 qui affiche successivement deux états logiques "1" qui font basculer les bascules 47 et 48 à l'état logique " 1". Ces bascules commandent l'allumage des ampoules lumineuses 51 et 52 par l'intermédiaire des amplificateurs 49 et 50.

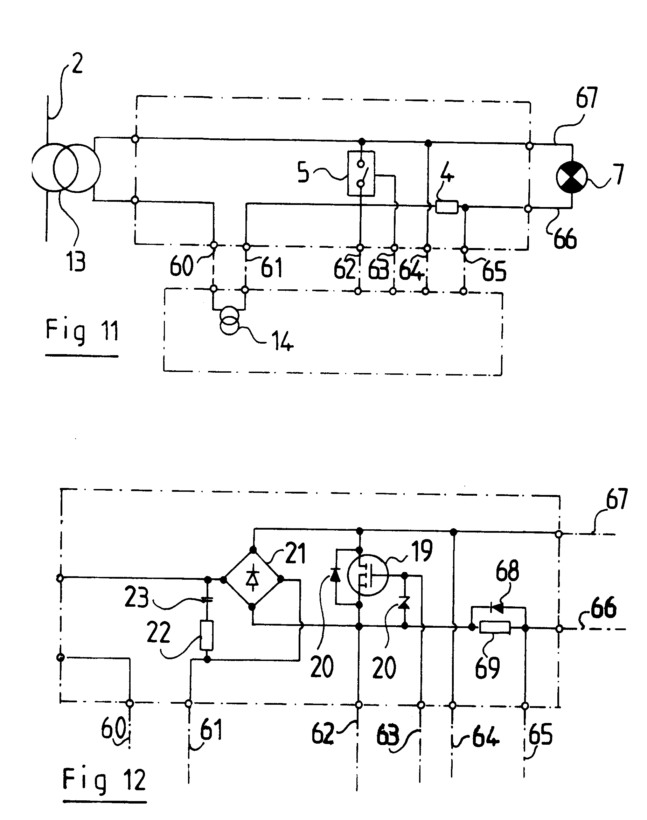

Le récepteur 9 est constitué d'éléments et de circuits semblables à l'émetteur 10 puisqu'il a aussi pour fonction de reconnaître des signaux et d'en émettre d'autres. Les figures 11 à 14 exposent un mode de réalisation d'un tel récepteur.

Dans la figure 11 est représenté un schéma de fonctionnement de la partie puissance d'un récepteur 9 selon l'invention. Dans cette figure se trouve un interrupteur 5, une impédance 4, placée en série avec une balise 7, les deux étant en parallèle avec l'interrupteur 5. Un transformateur d'intensité 13 est relié à ce circuit et au câble 2 du réseau. Un transformateur d'intensité secondaire 14 alimente la partie commande du récepteur 9. Enfin des fils 60 et 61 relient le transformateur 14 à ce circuit de puissance, des fils 62, 63, 64 et 65 relient le circuit de commande au circuit de puissance et des fils 66 et 67 relient la balise 7 au circuit de puissance.

La figure 12 représente un mode de réalisation pratique de ce circuit de puissance d'un récepteur 9. On y trouve un transistor MOS 19 associé à des diodes de protection 20. Un redresseur 21 associé à une résistance 22 et à un condensateur 23 permet de polariser l'alimentation électrique du transistor 19. L'impédance 4 est constituée d'une résistance-shunt 69 associée en parallèle avec une diode 68. On retrouve sur cette figure 12 les fils 60 à 67. Les fils électriques 62, 63, 64 et 65 reliant le circuit de commande à ce circuit de puissance sont connectés respectivement à une borne du transistor 19, à la base du transistor 19, à l'autre borne du transistor 19 et à la borne de la résistance 69 non connectée au transistor 19. Dans ce mode de réalisation, c'est la balise 7 elle-même qui sert d'impédance pour l'émission des signaux de réponse vers l'émetteur 10.

Dans ce mode de réalisation, la résistance 69 permet de vérifier le bon fonctionnement de la balise 7, même quand le transistor 19 est passant puisqu'une tension reste appliquée à l'ensemble constitué de la balise 7 et de la résistance 69.

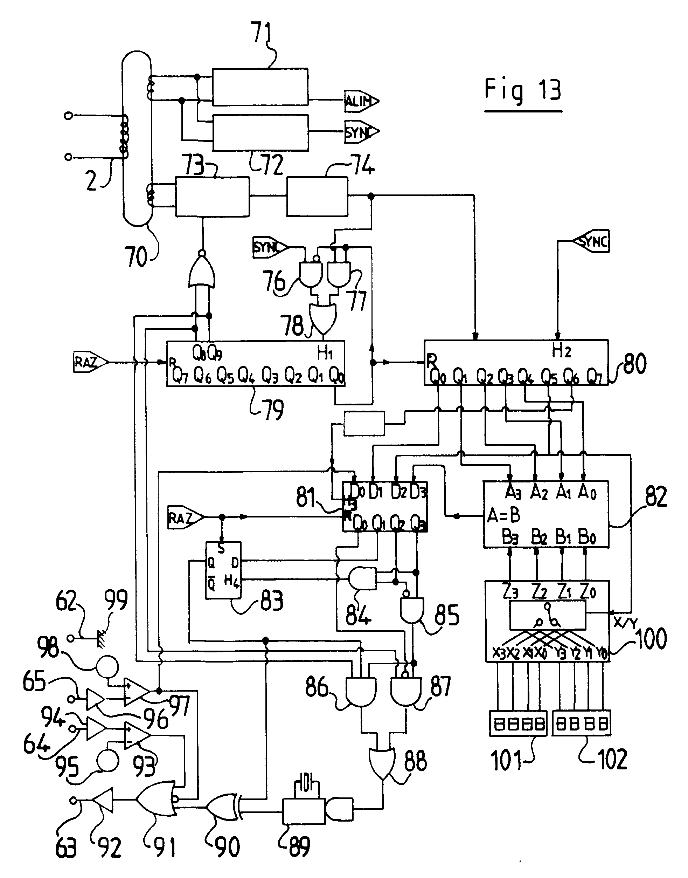

La figure 13 représente un schéma de fonctionnement de la partie commande d'un récepteur 9 selon l'invention. On y trouve un transformateur 70 branché sur son circuit primaire sur le câble électrique 2 du réseau, et sur son enroulement secondaire un module d'alimentation 71 émettant l'énergie nécessaire au fonctionnement du circuit de commande, un module de synchronisation 72 émettant des impulsions de synchronisation à chaque passage à zéro du courant porteur, un module de détection de fréquence 73, validé par une porte logique "non ou" 75 et lié à sa sortie à un module de mise en forme 74. La sortie de ce module de mise en forme est liée d'une part à l'entrée D d'un registre à décallage 80 et d'autre part à une porte logique "et" 77. Un compteur 79 à dix sorties Qo à Q9 est lié sur ses sorties Q8 et Q9 aux entrées de la porte logique 75 à sa sortie logique Qo à l'autre entrée de la porte logique 77 et à la patte de validation R du registre à décallage 80. La porte logique 77 est liée en sortie à une entrée d'une porte logique "ou" 78, elle-même reliée sur son autre entrée à la sortie d'une porte logique "et" 76 à entrée inverseuse reliée à la patte de sortie logique Qo du compteur 79 et sur son entrée non inverseuse au module de synchronisation 72. Ledit module de synchronisation 72 est aussi relié à l'entrée H du registre à décallage 80. La sortie Qo de ce registre à décallage 80 est reliée à l'entrée D1 d'une mémoire 81. Les sorties Q1 à Q4 du registre 80 sont reliées aux entrées A3 à Ao d'un comparateur 4 bits 82. La sortie Q5 du registre 80 est reliée à l'entrée D2 de la mémoire 81 et à la patte de sélection X/Y d'un sélecteur 100. La sortie Q6 du registre 80 est reliée à l'entrée H de la mémoire 81. La sortie A=B du comparateur 82 est reliée à l'entrée D3 de la mémoire 81. Deux circuits de quatre interrupteurs miniatures 101 et 102 affichent les adresses de commande et d'état 101 et 102 du récepteur 9 considéré. Ces interrupteurs connectent les entrées X3 à Xo et Y3 à Yo du sélecteur 100 à des niveaux logiques "o" ou "1". Le sélecteur 100 affiche sur ses sorties Z3 à Zo les niveaux X3 à Xo ou Y3 à Yo selon le niveau logique affiché sur son entrée X/Y. Les pattes de sorties Q2 et Q3 de la mémoire 81 sont reliées à une porte logique "et" 84 et à une porte logique "et" à une entrée inverseuse 85, l'entrée inverseuse étant reliée à la sortie Q2. La sortie de la porte logique 84 est reliée à la patte H4 d'un bistable de type D 83. La sortie Qo de la mémoire 81 est reliée à la patte D du bistable 83. Enfin la patte Qo de la mémoire 81 est reliée à une entrée inverseuse d'une porte logique "et" 87, reliée sur ces autres entrées, non inverseuses, à la sortie de la porte logique 85 et à la patte Q8 du compteur 79. Une porte logique "et" 86 est reliée sur ses entrées à la sortie de la porte logique 85, à la patte Q de la bascule 83 et à la patte Q9 du compteur 79. Les sorties des portes logiques 87 et 86 sont reliées aux entrées d'une porte logique "ou" 88 dont la sortie commande un oscillateur 89 dont la sortie entre sur une porte logique 90 reliée sur son autre entrée à la patte Q de la bascule 83. Le fil électrique 62 est relié à une masse 99. Les fils 64 et 65 sont reliés à des amplificateurs 94 et 96 connectés en leur sortie à des comparateurs 93 et 97 reliés sur leur autre entrée à des références de tension 95 et 98 et sur leur sortie à une entrée non inverseuse et à une entrée inverseuse d'une porte logique 91 dont la dernière entrée, non inverseuse, est reliée à la sortie de la porte logique 90, respectivement. Enfin, la sortie de la porte 91 est reliée à un amplificateur 92 relié au fil électrique 63.

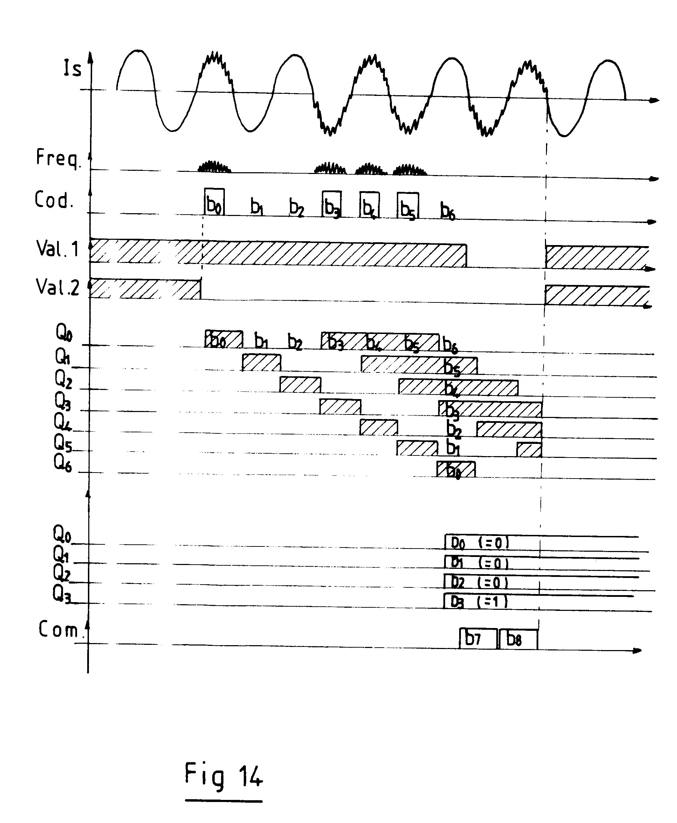

Le fonctionnement de ce circuit de commande est d'une compréhension plus aisée en regard de la figure 14 qui représente un diagramme temporel de signaux circulant dans ce circuit. Cependant, les fonctionnements des composants principaux de ce circuit sont donnés ici. Le compteur 79 compte les impulsions de synchronisation et donne les instants d'émission de signaux par ses sorties Q8 et Q9. Le registre à décallage 80 affiche en parallèle sur ses sorties Qo à Q6 les états logiques qu'il reçoit en série sur son entrée D. La sortie Q5 qui correspond à la sélection entre un ordre et une demande d'état par l'émetteur de la télécommande sélectionne les adresses, de commande ou d'état, affichée sur le sélecteur 100. Le comparateur 82 compare l'adresse sélectionnée à celle affichée sur les sorties Q1 à Q4 du registre 80. Si ces adresses sont identiques, le comparateur affiche un état logique "1" sur l'entrée D3 de la mémoire 81. L'entrée Do de cette mémoire 81 est reliée à la sortie du comparateur 97 et affiche donc l'état, panne ou bon état, de la balise 7. La bascule 83 sert à commander l'allumage ou l'extinction de la balise 7, par la partie puissance du récepteur.

Sur la figure 14 sont représentés successivement de haut en bas le signal porté par le réseau, le signal émis par le détecteur de fréquence 73, le signal affiché par le module de mise en forme 74, le signal de sortie de la porte logique 75, l'état de la patte Qo du compteur 79, l'état des pattes Qo à Q6 du registre à décallage 80, l'état des pattes de sortie Qo à Q3 de la mémoire 81, le signal d'entrée de l'oscillateur 89, dans un exemple où l'émetteur de la télécommande est une demande d'état du récepteur 9 d'adresse d'état numéro 7, le récepteur 9 répondant que la balise 7 est en bon état et allumée.

Les premiers signaux sont d'une compréhension aisée. Les signaux affichés sur les pattes Qo à Q6 du registre à décallage 80, correspondent à un décallage progressif des informations provenant en série du module de mise en forme 74. Quand les sept codes ont été transmis, la porte Q6 est nécessairement dans un état "1" et valide le transfert aux sorties Qo à Q3 de la mémoire 81 des entrées Do à D3 de cette mémoire Do et Qo correspondent à l'état de la balise 7, "1" si la balise est en panne et "o" si elle est en état. D1 et Q1 correspondent à l'ordre d'allumage ou d'extinction de la balise reçue. D2 et Q2 correspondent à la demande, ordre envoyé représenté par l'état logique "1" et demande d'état représenté par l'état logique "o". Enfin D4 et Q4 correspondent à la validation de l'adresse par le comparateur 82. On remarque que si cette adresse n'est pas validée les fils 62, 63, 64 et 65 ne reçoivent aucun signal.

La porte 90 ouvre ou ferme l'interrupteur 4 formé du transistor 19 par l'affichage d'un état permanent en-dehors des temps d'émission sur le fil 63.

Au cours des périodes où l'une des sorties Q8 ou Q9 est à l'état logique "1", les portes 97 et 86 sont successivement validées en fonction des autres signaux qu'elles reçoivent et mettent en oscillation l'oscillateur si l'adresse est validée (sortie Q3 de la mémoire 81 à l'état logique 1) et si la bascule commande un allumage de la balise 7 (pour la porte 86) et si la balise est en état, soit quand la patte Qo de la mémoire 81 affiche un "o" (pour la porte 87).

L'oscillation de l'oscillateur 89 est affichée sur le fil 63 qui commande le transistor 19 et injecte l'impédance formée par la balise 7, de telle manière que la modulation d'amplitude de la tension puisse être lue par l'émetteur.

Il est à noter que de nombreuses variantes de circuits d'émission et de réception peuvent être utilisés en ce qui concerne principalement les parties puissances de ces circuits et les positions respectives des commutateurs par rapport au générateur 1 ou à la charge 3, en fonction du paramètre fixe du courant.

Enfin, les circuits présentés pour un mode de réalisation particulier pourront facilement être transposés aux applications à la domotique pour commander aussi bien les ouvertures et fermetures de verrous, de lumières ou d'appareils électriques.

## Revendications

1. Dispositif de télécommande à courant porteur destiné à être monté sur un réseau électrique comportant une charge électrique (3) et un générateur électrique (1) imposant à ses bornes un paramètre fixe électrique, tension ou intensité, caractérisé en ce qu'il comprend d'une part un émetteur (10) comportant une impédance (4′) et un commutateur (5′) électriquement connectés de manière que la commutation du commutateur (5′) fait varier le paramètre fixe aux bornes de la charge électrique (3), et d'autre part un récepteur (9) comportant une impédance (4) et un commutateur (5) électriquement connectés de manière que la commutation du commutateur (5) ne fait pas varier le paramètre fixe aux bornes du générateur électrique (1).

2. Dispositif selon la revendication 1, caractérisé en ce que le paramètre fixe étant la tension électrique, l'impédance (4′) de l'émetteur (10) est placée en série avec le générateur (1), et son commutateur (5′) en parallèle de ladite impédance (4′), l'impédance du récepteur (9) étant placée en série avec son commutateur (5), ces deux composants étant placés en parallèle de la charge (3).

3. Dispositif selon la revendication 1 caractérisé en ce que le paramètre fixe étant l'intensité électrique, l'impédance (4′) de l'émetteur (10) est placée en série avec son commutateur (5′), ces deux composants étant placés en parallèle du générateur (1), l'impédance (4) du récepteur (9) étant placée en série avec la charge (3) et le commutateur (5) du même récepteur (9) en parallèle de son impédance (4).

4. Dispositif selon l'une quelconque des revendications précédentes, caractérisé en ce que le commutateur (5) de chaque récepteur (9) commande le fonctionnement de la charge électrique (3) et en ce que cette charge électrique (3) comprend l'impédance (4) dudit récepteur (9).

5. Dispositif selon l'une quelconque des revendications précédentes, caractérisé en ce que les commutateurs (5, 5′) sont commandés par des oscillateurs (33, 89) dont les fréquences d'oscillation sont supérieures à celle du courant électrique du réseau.

6. Dispositif selon l'une quelconque des revendications précédentes, caractérisé en ce que les commutateurs (5, 5′) sont constitués d'au moins un dispositif à semi-conducteur (19, 20).

7. Dispositif selon l'une quelconque des revendications précédentes, caractérisé en ce que les impédances (4, 4′) sont des résistances.

8. Dispositif selon l'une quelconque des revendications précédentes, caractérisé en ce qu'il comporte des circuits électroniques associés aux commutateurs (5, 5′) et aux câbles électriques (2) du réseau, lesdits circuits comportant un analyseur de fréquence (27, 73) des moyens d'émission (32, 56, 57, 84, 85, 86, 87, 88, 90, 91, 92) et de réception (29, 45, 46, 47, 48, 49, 50, 76, 77, 78, 80) d'informations logiques, des moyens de traitement de ces informations (30, 82, 83) et des moyens de codage (32, 34, 35, 36, 81) de ces informations.

9. Dispositif selon la revendication 8, caractérisé en ce qu'il comporte plusieurs récepteurs (9) et en ce que chacun de ces récepteurs (9) possède une mémoire (100, 101, 102) adaptée à afficher un numéro attribué à ce récepteur (9).

10. Dispositif selon l'une quelconque des revendications précédentes, caractérisé en ce qu'il comporte des moyens (32, 86, 87) de codage en série de plusieurs informations et des moyens (32, 80) de décodage d'informations envoyées successivement sur le réseau.

## Patentansprüche

1. Fernsteuervorrichtung mit Trägerstrom, die dazu bestimmt ist, über ein elektrisches Stromnetz geschaltet zu werden, welches eine elektrische Last (3) und einen elektrischen Generator (1) enthält, dem an seinen Klemmen ein fester elektrischer Parameter, Spannung oder Stromstärke, aufgedrückt wird, **dadurch gekennzeichnet**, daß sie umfaßt einerseits einen eine Impedanz (4′) und einen Schalter (5′) enthaltenden Sender (10), welche elektrisch so geschaltet sind, daß das Schalten des Schalters (5′) den festen Parameter an den Klemmen der elektrischen Last (3) verändert, und andererseits einen eine Impedanz (4) und einen Schalter (5) enthaltenden Empfänger (9), die elektrisch so geschaltet sind, daß das Schalten des Schalters (5) den festen Parameter an den Klemmen des elektrischen Generators (1) nicht verändert.

2. Vorrichtung nach Anspruch 1, **dadurch gekennzeichnet**, daß der feste Parameter die elektrische Spannung ist, die Impedanz (4′) des Senders (10) in Serie mit dem Generator (1) und sein Schalter (5′) zu dieser Impedanz (4′) parallel liegt, die Impedanz des Empfängers (9) in Serie mit seinem Schalter (5) liegt, wobei diese beiden Komponenten parallel zur Last (3) liegen.

3. Vorrichtung nach Anspruch 1, **dadurch gekennzeichnet**, daß der feste Parameter die elektrische Stromstärke ist, die Impedanz (4′) des Senders (10) in Serie mit seinem Schalter (5′) liegt, diese beiden Komponenten parallel zum Generator (1) liegen, die Impedanz (4) des Empfängers (9) in Serie mit der Last (3) und der Schalter (5) dieses Empfängers (9) parallel zu seiner Impedanz (4) liegen.

4. Vorrichtung nach einem der vorhergehenden Ansprüche, **dadurch gekennzeichnet**, daß der Schalter (5) jedes Empfängers (9) die Funktion der elektrischen Last (3) steuert und daß diese elektrische Last (3) die Impedanz (4) dieses Empfängers (9) umfaßt.

5. Vorrichtung nach einem der vorhergehenden Ansprüche, **dadurch gekennzeichnet,** daß die Schalter (5, 5′) durch Oszillatoren (33, 89) gesteuert werden, deren Schwingungsfrequenz über derjenigen des elektrischen Stroms des Stromnetzes liegt.

6. Vorrichtung nach einem der vorhergehenden Ansprüche, **dadurch gekennzeichnet,** daß die Schalter (5, 5′) durch mindestens eine Halbleitervorrichtung (19, 20) gebildet werden.

7. Vorrichtung nach einem der vorhergehenden Ansprüche, **dadurch gekennzeichnet**, daß die Impedanzen (4, 4′) durch Widerstände gebildet werden.

8. Vorrichtung nach einem der vorhergehenden Ansprüche, **dadurch gekennzeichnet**, daß sie den Schaltern (5, 5′) und den elektrischen Kabeln (2) des Stromnetzes zugeordnete elektronische Schaltkreise enthält, diese Stromkreise einen Frequenzanalysator der Sende (32, 56, 57, 84, 85, 86, 87, 88, 90, 91, 92) und der Empfangsmittel (29, 45, 46, 47, 48, 49, 50, 76, 77, 78, 80) von logischen Informationen, Mittel der Verarbeitung dieser Informationen (30, 82, 83) und Mittel der Codierung (32, 34, 35, 36, 81) dieser Informationen enthält.

9. Vorrichtung nach Anspruch 8, **dadurch gekennzeichnet**, daß sie mehrere Empfänger (9) umfaßt und daß jeder dieser Empfänger (9) einen Speicher (100, 101, 102) besitzt, der zur Anzeige der diesem Empfänger (9) zugeordneten Nummer angepaßt ist.

10. Vorrichtung nach einem der vorhergehenden Ansprüche, **dadurch gekennzeichnet**, daß sie Mittel (32, 86, 87) zur seriellen Codierung mehrerer Informationen und Mittel (32, 80) zur Decodierung von Informationen enthält, welche in dem Stromnetz aufeinanderfolgend gesendet werden.

## Claims

1. Remote control device with a carrier current intended to be connected to an electrical network consisting of an electrical load (3) and an electrical generator (1) imposing at its terminals a fixed electrical parameter, voltage or intensity, characterised in that it comprises on the one hand an emitter (10) consisting of an impedance (4′) and an electrical commutation switch (5′) connected in such a way that the commutation of the switch (5′) makes the fixed parameter at the terminals of the electrical load (3) vary and on the other hand, a receiver (9) consisting of an impedance (4) and an electrical commutation switch (5) connected in such a way that the commutation of the switch (5) does not make the fixed parameter at the terminals of the electrical generator (1) vary.

2. Device according to claim 1 characterised in that the fixed parameter being the electrical voltage, the impedance (4′) of the emitter (10) is placed in series with the generator (1), and its commutation switch (5′) in parallel with the said impedance (4′), the impedance of the receiver (9) being placed in series with its commutation switch (5), these two components being placed in parallel with the load (3).

3. Device according to claim 1 characterised in that the fixed parameter being the electrical intensity, the impedance (4′) of the emitter (10) is placed in series with its commutation switch (5′), these two components being placed in parallel with the generator (1), the impedance (4) of the receiver (9) being placed in series with the load (3) and the commutation switch (5) of the same receiver (9) in parallel with its own impedance (4).

4. Device according to any one of the preceding claims characterised in that the commutation switch (5) of each receiver (9) controls the operation of the electrical load (3) and in that this electrical load (3) consists of the impedance (4) of said receiver (9).

5. Device according to any one of the preceding claims characterised in that the commutation switches (5, 5′) are controlled by oscillators (33, 89) whose oscillation frequencies are higher than that of the electrical current of the network.

6. Device according to any one of the preceding claims characterised in that the commutation switches (5, 5′) are comprised of at least a semiconductor device (19, 20).

7. Device according to any one of the preceding claims characterised in that the impedances (4, 4′) are resistances.

8. Device according to any one of the preceding claims characterised in that it comprises electronic circuits associated with the commutation switches (5, 5′) and the electrical cables (2) of the network, the said circuits comprising a frequency analyser (27, 73) of the emitter means (32, 56, 57, 84, 85, 86, 87, 88, 90, 91, 92) and the receiver means ( 29, 45, 46, 47, 48, 49, 50, 76, 77, 78, 80) of the logical messages, processing means of these messages (30, 82, 83) and coding means of these messages (32, 34, 35, 36, 81).

9. Device according to claim 8 characterised in that it comprises several receivers (9) and in that each of these receivers (9) possess a memory (100, 101, 102) adapted to display a number attributed to the receiver (9).

10. A device according to any one of the preceding claims characterised in that it comprises means (32, 86, 87) of coding in series several messages and means (32, 80) for decoding messages sent successively over the network.
